# EUROPÄISCHE PATENTSCHRIFT

(11) **EP 3 228 176 B1**
(45) Veröffentlichungstag und Bekanntmachung des Hinweises auf die Patenterteilung: **20.11.2019**
(21) Anmeldenummer: 17159475.7
(22) Anmeldetag: 07.03.2017
(51) Int. Cl.: A01D 90/04, A01D 90/06, A01D 43/08, A01D 87/00, A01F 15/10

(54) **ERNTEMASCHINE MIT EINER SCHNEIDVORRICHTUNG**
HARVESTING MACHINE WITH A CUTTING DEVICE
MOISSONNEUSE COMPRENANT UN DISPOSITIF DE COUPE

(30) Priorität: 08.04.2016 DE 102016106447
(43) Veröffentlichungstag der Anmeldung: 11.10.2017
(73) Patentinhaber: Usines Claas France S.A.S, 57140 St. Rémy / Woippy (FR)
(72) Erfinder: Waechter, Julien, 57000 Metz (FR); Delamaire, Morgan, 54700 Pont-à-Mousson (FR)
(74) Vertreter: CLAAS Gruppe

(56) Entgegenhaltungen:
- EP-A1- 0 659 332
- EP-A1- 0 689 760
- AT-U1- 11 286
- DE-A1- 2 459 831
- US-B1- 7 510 472

## Beschreibung

Die Erfindung betrifft eine Erntemaschine, insbesondere eine Ballenpresse oder einen Ladewagen, mit einer Schneidvorrichtung für landwirtschaftliches Erntegut gemäß dem Oberbegriff des Anspruchs 1.

Erntemaschinen wie eine landwirtschaftliche Ballenpresse oder ein Ladewagen sind oftmals mit einer Schneidvorrichtung zum Zerkleinern von Erntegut, beispielsweise Halm- und/oder Blattgut, ausgestattet, welches der Erntemaschine zugeführt wird. Auch andere landwirtschaftliche Erntemaschinen können mit einer solchen Schneidvorrichtung ausgestattet sein.

Aus der US 566 1961 A ist eine Schneidvorrichtung in Form eines Anbaugerätes für eine Ballenpresse bekannt, welches unter einer Deichsel der Ballenpresse vor der eigentlichen Erntegutaufnahme der Ballenpresse angeordnet ist, so dass das Erntegut aus dem Anbaugerät über eine normale Pickup und einen Erntegutkanal in die Rundballenpresse gelangt. Die Anbauvorrichtung ist dabei bodenseitig offen, so dass auch noch nicht geerntetes, stehendes Erntegut durch die rotierenden Messer abgetrennt werden kann. Dieses Anbaugerät hat jedoch neben einem erhöhten Bauraum und Gewichtsbedarf den Nachteil, dass durch die offene Bauart eine erhöhte Verletzungsgefahr besteht und dass es beispielsweise bei Bodenunebenheiten zu einem Kontakt der Messer mit dem Boden kommen kann, wodurch das Anbaugerät und die Ballenpresse beschädigt werden können.

Eine alternative Vorrichtung zum Zerkleinern des Erntegutes sieht dabei eine Anordnung der Schneidvorrichtung innerhalb der Erntemaschine vor. Derartige Schneideinrichtungen sind beispielsweise aus der EP 0 659 332 A1 oder AT 11 286 U1 bekannt. Die Schneidvorrichtung ist dabei in einem vom Erntegut durchströmten Erntegutkanal der Ballenpresse, des Ladewagens oder sonstigen landwirtschaftlichen Maschine, so angeordnet, dass das Erntegut auf in den Erntegutkanal hineinragenden Messer zu gefördert wird, um in Kontakt mit den Messerkanten geschnitten zu werden.

Bei Ballenpressen und Ladewagen wird eine Förderung des Erntegutes im Wirkungsbereich der Messer durch einen Förderrotor bewirkt, der sich um eine quer zur Gutstromrichtung angeordnete Drehachse dreht und in axialer Richtung, entlang der Drehachse, zumeist mit einer Vielzahl von Rotorsternen ausgestattet ist.
Die Rotorsterne sind in der Regel mit den äußeren Enden leicht verdreht zueinander auf der Achse montiert, um eine weitestgehend kontinuierliche Förderung des Ernteguts sowie gleichmäßige Belastung des zugehörigen Antriebsstrangs zu erzielen. Nachteilig ist hierbei die Anordnung der Messer innerhalb des Erntegutkanals, wodurch ein erhöhter Verschleiß auftritt und der Wartungsaufwand bei Verschleiß oder Beschädigung der Messer mit einem hohen Wartungsaufwand und längeren Stillstandzeiten verbunden ist.

Es ist daher eine Aufgabe der vorliegenden Erfindung, eine mit einer Schneidvorrichtung ausgestattete Erntemaschine anzugeben, die eine Reduzierung des Wartungsaufwandes der Schneidvorrichtung ermöglicht.

Die Aufgabe wird erfindungsgemäß durch die kennzeichnenden Merkmale des unabhängigen Patentanspruches 1 gelöst. Vorteilhafte Ausgestaltungen und Weiterbildungen der Erfindung ergeben sich aus den nachstehenden Unteransprüchen und den nachfolgenden Beschreibungen.

Eine Erntemaschine, insbesondere Ballenpresse oder Ladewagen, weist eine Schneidvorrichtung für landwirtschaftliches Erntegut auf, wobei die Schneidvorrichtung eine Vielzahl von jeweils in einer Schneidebene wirkenden Schneidelementen aufweist, wobei die Schneidelemente in Bezug auf einen von Erntegut durchströmten Erntegutkanal nebeneinander angeordnet sind und während des Betriebes der Schneidvorrichtung durch ein mit Ausnehmungen versehenes Gutleitelement zumindest teilweise in den Erntegutkanal hineinragen und mit einer Gegenschneide zum Zerkleinern des Erntegutes zusammenwirken, und einen antreibbaren Förderrotor zum Fördern des Erntegutes. Gemäß der Erfindung ist die Schneidvorrichtung um einer Rotationsachse frei drehbar gelagert und antreibbar ausgebildet. Die Schneidvorrichtung ist dabei frei, ohne Anschlag, um die Rotationsachse drehbar ausgebildet. Die Schneidvorrichtung weist mindestens ein Schneidelement auf, welche zum Zerkleinern des Erntegutes mit einer Gegenschneide zusammenwirkt, und beispielsweise mit dieser in kämmendem Eingriff steht.

Die rotierende Schneidvorrichtung gemäß der Erfindung ermöglicht eine von der Fördergeschwindigkeit des Erntegutes unabhängige, insbesondere deutlich erhöhte, Schnittgeschwindigkeit, also der Relativgeschwindigkeit zwischen Schneidelement und Gegenschneide, als bei passiven Messern, welche lediglich in den Erntegutkanal hineinragen und wo die Schnittgeschwindigkeit im Wesentlichen von der Fördergeschwindigkeit des Erntegutes abhängig ist. Bei hohen Schnittgeschwindigkeiten ist für eine gute Schnittqualität die Schärfe der Schneidelemente weniger relevant, so dass die Schneidelemente auch mit einer geringeren Schärfe betrieben werden können. Daher können die Schneidelemente der rotierenden Schneidvorrichtung im Gegensatz zu passiven Messern länger genutzt bevor ein Nachschleifen oder ein Austausch notwendig ist. Dadurch können die Standzeit der Schneidvorrichtung erhöht und die Wartungsintervalle verlängert werden, so dass der Wartungsaufwand reduziert werden kann.

In einer vorteilhaften Ausgestaltung der Erfindung ist die Gegenschneide ortsfest oder beweglich, insbesondere verschiebbar und/oder drehbar, ausgebildet. Die Schneidvorrichtung wirkt zum Zerteilen des Erntegutes mit der Gegenschneide zusammen. Durch eine verstellbar ausgebildete Gegenschneide ist das Zusammenwirken der Schneidvorrichtung mit der Gegenschneide, insbesondere ein wirksamer Überlappungsbereich der Schneidvorrichtung mit der Gegenschneide, einstellbar, wodurch beispielsweise Schnittkräfte und eine Belastung eines Antriebs einstellbar sind.

Gemäß der Erfindung bildet der Förderrotor die Gegenschneide. Der Förderrotor kann dabei insbesondere sternförmig ausgebildete Rotorelemente aufweisen, welche benachbart zueinander entlang einer Drehachse des Förderrotors angeordnet sein können, wobei Schneidelemente der Schneidvorrichtung jeweils mit den Rotorelementen zum Schneiden des Erntegutes zusammenwirken können. Hierdurch kann zum einen die Gegenschneide bauraumsparend in die Erntemaschine integriert werden. Zum anderen kann insbesondere durch die rotierende Gegenschneide in Form des rotierenden Förderrotors die Drehzahl der Schneidvorrichtung gesenkt werden, wobei eine Relativgeschwindigkeit zwischen der Schneidvorrichtung und der Gegenschneide im Wesentlichen unverändert hoch bleiben kann. Dies hat den Vorteil, dass bei einer Fördergeschwindigkeit des Erntegutes, welche im Wesentlichen an die Drehzahl des Förderrotors angepasst ist, die Schnittgeschwindigkeit gegenüber passiven Messern, welche lediglich in den Erntegutstrom hineinragen, deutlich erhöht werden kann.

In einer besonders vorteilhaften Weiterbildung der Erntemaschine ist vorgesehen, dass die Rotationsachse der Schneidvorrichtung bezogen auf die Förderrichtung des Erntegutes hinter einer Drehachse des Förderrotors angeordnet ist. Dabei ist eine Lotrechte von der Rotationsachse der Schneidvorrichtung entlang des Erntegutstromes presskammerseitig einer Lotrechten der Drehachse des Förderrotors angeordnet. Diese Anordnung hat den Vorteil, dass das Erntegut bereits durch den Förderrotor beschleunigt wurde und dadurch durch das Zusammenwirken des Förderrotors und der Schneidvorrichtung ein verbessertes Schnittergebnis erreicht werden kann.

Vorteilhafterweise ist eine Drehzahl und/oder Drehrichtung der Schneidvorrichtung in Abhängigkeit mindestens eines Maschinenparameters und/oder eines Betriebsparameters regelbar. Dies bietet den Vorteil, dass auch bei unterschiedlichen oder sich verändernden Maschinen- und/oder Betriebszuständen ein zuverlässiges Zerkleinern des Erntegutes sichergestellt werden kann.

In einer vorteilhaften Ausgestaltung der Erfindung weist ein Schneidelement jeweils mindestens ein Schneidmesser auf, wobei mehrere Schneidmesser innerhalb einer Schneidebene nebeneinander und/oder in Drehrichtung hintereinander anordbar sind. Innerhalb einer Schneidebene nebeneinander angeordnete Schneidmesser können dabei entlang der Rotationsachse axial beabstandet im Wesentlichen benachbart oder in Drehrichtung versetzt angeordnet sein. Dadurch, dass die Schneidmesser innerhalb einer Schneidebene unterschiedlich anordbar sind, können unterschiedliches Erntegut und/oder unterschiedliche Erntegutbedingungen berücksichtigt werden, um ein zuverlässiges Zerkleinern des Erntegutes zu gewährleisten.

Gemäß der Erfindung weist die Schneidvorrichtung eine Trägerwelle auf, an welcher mindestens ein Schneidelement und/oder ein Schneidmesser lösbar und klappbar angeordnet ist. Die lösbare Anordnung eines Schneidelementes und/oder eines Schneidmesser ermöglicht ein Auswechseln oder Umdrehen des Schneidelementes und/oder des Schneidmessers mit geringem Aufwand. Bei einer klappbaren Anordnung kann eine Klappbewegung um eine Klappachse erfolgen, welche im Wesentlichen parallel zur Rotationsachse angeordnet ist. Die klappbare Anordnung, insbesondere eines Schneidmessers, an der Trägerwelle bietet den Vorteil, dass das Schneidmesser zum einen bei einem Betrieb der Schneidvorrichtung durch die Zentrifugalkraft in radialer Richtung aufgestellt wird. Zum anderen kann das Schneidelement und/oder das Schneidmesser beispielsweise bei Kontakt mit einem Fremdkörper wie einem Stein in dem zu schneidenden Erntegut durch eine Kippbewegung nachgeben, wodurch eine Beschädigung des Schneidelementes und/oder des Schneidmessers vermieden oder zumindest verringert werden kann.

Weiterhin ist in einer Ausgestaltung der Erfindung vorgesehen, dass ein Schneidmesser einschneidig oder mehrschneidig ausgebildet ist. Eine Schneide eines Schneidmessers kann mit einer Gegenschneide zum Zerteilen des Erntegutes zusammenwirken. Ein Schneidmesser mit mehreren Schneiden kann beispielsweise in Drehrichtung betrachtet eine erste Schneide an der vorderen Kante und eine zweite Schneide an der hinteren Kante aufweisen. Dadurch kann bei auftretendem Verschleiß der ersten Schneide das Schneidmesser gedreht und mit der zweiten Schneide nach nur einer kurzen Unterbrechung weiter gearbeitet werden. Zudem hat zweischneidiges Schneidmesser, mit jeweils einer Schneide pro Drehrichtung den Vorteil, dass bei einer Umkehr der Drehrichtung der Schneidvorrichtung ohne Montageaufwand nahezu verzögerungsfrei ein zuverlässiges Zerteilen des Erntegutes ermöglicht wird.

Gemäß einer weiteren vorteilhaften Ausgestaltung der Erfindung ist die Schneidvorrichtung in eine Betriebsposition, eine Außerbetriebsposition und/oder eine Wartungsposition verlagerbar ausgebildet. Durch eine Verlagerung der Schneidvorrichtung von einer Betriebsposition, in welcher Erntegut zerkleinert werden kann, in eine Außerbetriebsposition, in welcher keine Zerkleinerung des Erntegutes durch die Schneidvorrichtung erfolgt, kann eine Förderung des Erntegutes vereinfacht werden, oder die Erntemaschine ohne aufwändige Umrüstung für ein unterschiedliches Erntegut eingesetzt werden. Das Verbringen der Schneidvorrichtung in eine Wartungsposition, beispielsweise durch ein zumindest teilweises seitliches Herausziehen aus der Erntemaschine, bietet den Vorteil, dass mit geringem Aufwand die Schneidvorrichtung für eine Kontrolle oder Wartung zugänglich gemacht werden kann.

Die Erfindung wird im Folgenden unter Hinweis auf die beigefügten Figuren anhand eines bevorzugten Ausführungsbeispiels näher erläutert. Daraus ergeben sich auch weitere Einzelheiten und Vorteile der Erfindung. Es zeigen:
- Fig. 1: eine Ballenpresse in schematischer Seitenansicht mit einer Schneidvorrichtung gemäß der Erfindung;
- Fig. 2: eine detaillierte Darstellung der Schneidvorrichtung gemäß Fig. 2;
- Fig. 3: eine schematische Draufsicht von Schneidelementen der Schneidvorrichtung im Eingriff mit einem Förderrotor; und

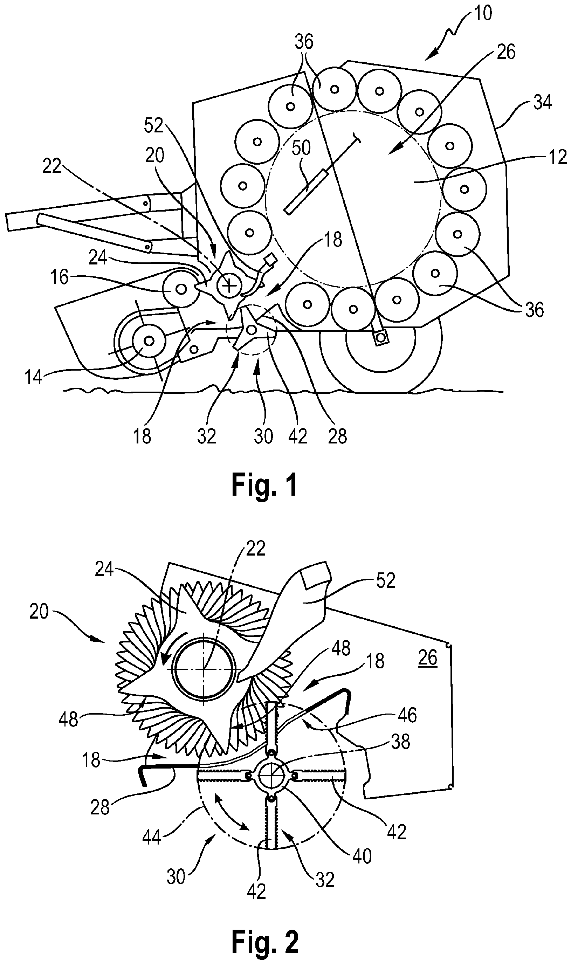

Fig. 1 zeigt eine Erntemaschine 10 in Form einer Ballenpresse in schematischer Seitenansicht. Eine Erntemaschine 10 kann in Form einer Rundballenpresse, einer Quaderballenpresse oder eines Ladewagens ausgebildet sein. Diese werden üblicherweise durch ein Zugfahrzeug wie einen Traktor (nicht dargestellt) gezogen und über eine mit dem Traktor koppelbare Antriebswelle zum Antrieb der Förder- und Verarbeitungseinrichtungen mit Energie versorgt. Die dargestellte Ballenpresse 10 nimmt im Erntebetrieb auf dem Feldboden liegendes Erntegut, beispielsweise zum Schwad gelegtes Stroh oder Gras, auf und verarbeitet dieses zu einem gepressten und beispielsweise mit einem Netz verschnürten Ballen 12, der nach Fertigstellung heckseitig aus der Ballenpresse 10 ausgeworfen wird.

Dazu nimmt die Ballenpresse 10 das Erntegut mittels einer mit Zinken besetzten Aufsammeltrommel 14 vom Boden auf, um es den weiteren Förder- und Verarbeitungseinrichtungen der Ballenpresse 10 zuzuführen. Das Erntegut wird dabei mittels eines Förderorgans 16 wie einer Querförderstrecke von einer ursprünglichen Aufnahmebreite der Aufsammeltrommel 14 auf eine geringer Breite eines Erntegutkanals 18 zusammengeführt und zu einem nachgelagert angeordneten Förderrotor 20 gefördert. Der Förderrotor 20 ist um eine Drehachse 22 drehbar gelagert und weist eine Vielzahl von zueinander beabstandet angeordneten, sternförmigen Rotorelementen 24 auf. Die Rotorelemente 24 sind dabei entlang der Drehachse 22 des Förderrotors 20 wendelförmig, also zueinander verdreht, angeordnet. Die Rotorelemente 24 ragen an einer Unterseite des Förderrotors 20 in den Erntegutkanal 18 hinein und fördern das Erntegut zur Verdichtung in Richtung einer Presskammer 26 der Ballenpresse 10. Durch die wendelförmige Anordnung der Rotorelemente 24 kann eine gleichmäßigere Förderung des Erntegutes und eine gleichmäßigere Belastung eines Antriebs des Förderrotors 20 erreicht werden.

Unmittelbar unterhalb des Förderrotors 20 erstreckt sich ein Gutleitelement 28 in Form eines gebogenen Bleches, welches den Erntegutkanal 18 über dessen gesamte Breite nach unten begrenzt. Unterhalb des Förderrotors 20 und des Gutleitelementes 28 ist eine Schneidvorrichtung 30 angeordnet, welche eine Vielzahl von Schneidelementen 32 aufweist, die zum Zerkleinern des Erntegutes durch das Gutleitelement 28 zumindest teilweise in den Erntegutkanal 18 hineinragen können. Die Schneidvorrichtung 30 ist dabei im Wesentlichen presskammerseitig des Förderrotors 20 angeordnet. Das zerkleinerte Erntegut wird anschließend der Presskammer 26 zugeführt, welche innerhalb eines Gehäuses 34 der Ballenpresse 10 durch kreisförmig angeordnete und antreibbare Presswalzen 36 ausgebildet ist. Zum Auswerfen eines fertig gepressten Ballens 12 aus der Presskammer 26 ist ein hinterer Teil des Gehäuses 34 mittels eines Aktors 50 in Form eines Hydraulikzylinders aufklappbar ausgebildet, wodurch der Ballen 12 heckseitig ausgeworfen werden kann.

In Figur 2 ist die Schneidvorrichtung 30 gemäß der Erfindung in einer Betriebsposition dargestellt. Die Schneidvorrichtung 30 weist eine Vielzahl von Schneidelementen 32 auf, welche bezogen auf den Erntegutkanal 18 quer zur Förderrichtung des Erntegutes nebeneinander angeordnet sind. Aufgrund der Darstellung als Seitenansicht ist in Figur 2 nur ein vorderes Schneidelement 32 dargestellt. Die Schneidvorrichtung 30 ist um eine Rotationsachse 38 frei drehbar gelagert und antreibbar ausgebildet. Unter frei drehbar ist dabei zu verstehen, dass die Schneidvorrichtung 30 anschlagfrei wiederholt um die Rotationsachse 38 herum in beide Drehrichtungen drehbar gelagert ist.

Die Schneidelemente 32 sind entlang der Rotationsachse 38 beabstandet zueinander an einer Trägerwelle 40, insbesondere lösbar, angeordnet und rotieren jeweils in einer Schneidebene 44. Zum Zerteilen des Erntegutes weisen die Schneidelemente 32 jeweils mindestens ein Schneidmesser 42 auf. Schneidelemente 32 sind im Wesentlichen senkrecht zu der Rotationsachse 38 der Schneidvorrichtung 30 angeordnet und können einstückig, beispielsweise sternförmig (Fig. 1), oder mehrteilig ausgebildet sein. Bei einem mehrteilig aufgebauten Schneidelement 32 kann das mindestens eine Schneidmesser 42 lösbar und insbesondere klappbar an der Trägerwelle 40 befestigbar sein. Ein klappbar an der Trägerwelle 40 angeordnetes Schneidmesser 42 ist dabei um eine Achse parallel zur Rotationsachse verschwenkbar. Dies ist besonders von Vorteil, wenn das Schneidmesser 42 beim Zerteilen des Erntegutes eine Verunreinigung wie einen Stein trifft und dann durch eine Klappbewegung ausweichen kann, so dass eine stärkere Beschädigung des Schneidmessers 42 vermieden werden kann. Die in Figur 2 dargestellten Schneidmesser 42 an der Trägerwelle 40 weisen eine im Wesentlichen geradlinige Erstreckung auf, wobei in Drehrichtung betrachtet sowohl an einer Vorderkante als auch an einer Hinterkante des Schneidmessers 42 eine wellenförmige Schneide ausgebildet ist, so dass in unabhängig von der Drehrichtung der Schneidvorrichtung 30 Erntegut zerteilt werden kann.

Die Schneidmesser 42 können verschieden ausgestaltet sein, wobei Vorder- und Hinterkanten der Schneidmesser 42 jeweils gleichartige oder unterschiedlich ausgebildete Schneiden aufweisen können. Die Kanten der Schneidmesser 42 können beispielsweise eine im Wesentlichen konkave, konvexe, bogenartige, gewellte oder gerade Form aufweisen, wodurch eine Anpassung an das jeweils zu verarbeitende Erntegut vorgenommen werden kann. Zudem kann durch die unterschiedliche Ausgestaltung der Kanten eines Schneidmessers 42 jede nach Drehrichtung der Schneidvorrichtung 30 ein anderes Schneidverhalten, beispielsweise für unterschiedliches Erntegut, bewirkt werden.

In der dargestellten Betriebsposition der Schneidvorrichtung 30 ragen die Schneidelemente 32 mit den Schneidmessern 42 zumindest teilweise in den Erntegutkanal 18 hinein. Hierfür weist das Gutleitelement 28, welches den Erntegutkanal 18 bodenseitig begrenzt, eine Vielzahl an schlitzartigen Ausnehmungen 46 auf, welche abgestimmt auf die Schneidebenen 44 der Schneidvorrichtung 30 in dem Gutleitelement 28 angeordnet sind. In dem Erntegutkanal 18 wirken die Schneidelemente 32 bzw. Schneidmesser 42 mit einer Gegenschneiden 48 zusammen, um durch den Erntegutkanal 18 gefördertes Erntegut zu zerkleinern. Die Gegenschneide 48 kann dabei einteilig oder mehrteilig ausgebildet sein. In dem gezeigten Ausführungsbeispiel ist die Gegenschneide 48 mehrteilig ausgebildet und wird durch den Förderrotor 20 und insbesondere durch dessen Rotorelemente 24 gebildet. Die Gegenschneide 48 ist um die Drehachse 22 herum drehbar und antreibbar ausgebildet, und kann ortsfest oder beweglich, verschiebbar und/oder verkippbar, ausgebildet sein, um eine Schnittwirkung der Schneidvorrichtung 30 durch eine Verlagerung der Gegenschneide 48 zu beeinflussen.

Die Schneidebenen 44 der Schneidvorrichtung 30 sind jeweils zwischen zwei benachbart zueinander angeordneten Rotorelementen 24 des Förderrotors 24 angeordnet. Die innerhalb einer Schneidebene 44 angeordneten Schneidelemente 32 stehen dabei, insbesondere in einer Betriebsposition der Schneidvorrichtung 30, zum Zerteilen des Erntegutes in kämmendem Eingriff mit den Rotorelementen 24, welche dabei die Gegenschneiden 48 für die Schneidelemente 32 und/oder Schneidmesser 42 bilden. Um ein Ansammeln von Erntegut an dem Förderrotor 20, insbesondere zwischen den Rotorelementen 24, zu vermeiden, sind Rotorabstreifer 52 vorgesehen, welche entlang der Drehachse 22 über die Breite des Förderrotors 20 derart angeordnet sind, dass die Rotorabstreifer 52 jeweils zwischen den Rotorelementen 24 und/oder innerhalb der Schneidebenen 44 angeordnet sind. Die Rotorabstreifer 52 stehen dabei ebenfalls in kämmendem Eingriff mit den Rotorelementen 24, so dass Erntegut, welches durch den Förderrotor 20 mitgenommen wird, an den Rotorabstreifern 52 aus dem Zwischenraum zwischen den Rotorelementen 24 nach radial außen weggefördert und mit dem Erntegutstrom der Presskammer 26 zugeführt werden kann.

Eine Drehzahl und/oder eine Drehrichtung der rotierenden Schneidvorrichtung 30 ist unabhängig von einer Drehzahl oder einer Drehrichtung des Förderrotors 20 einstellbar. Eine Drehzahl und/oder eine Drehrichtung der Schneidvorrichtung 30 kann, beispielsweise durch eine Steuervorrichtung (nicht dargestellt), in Abhängigkeit mindestens einem Maschinenparameter und/oder einem Betriebsparameter eingestellt werden, um eine optimale Schnittqualität zu erreichen. Ein Betriebsparameter ist dabei beispielsweise die Art des zu verarbeitenden Erntegutes, eine Fördergeschwindigkeit des Erntegutes in dem Erntegutkanal, und/oder eine Fahrgeschwindigkeit der Erntemaschine. Ein Maschinenparameter kann zum Beispiel ein Zustand der Schneidelemente 32 und/oder Schneidmesser 42 wie deren Schärfe, eine Anzahl der Schneidelemente 32 und/oder Schneidmesser 42, eine geometrische Ausgestaltung der Schneidkanten und/oder Anzahl der Schneiden, eine verfügbare Antriebsleistung für die Schneidvorrichtung 30 und/oder den Förderrotor 20 sein. Ebenso kann eine Einstellung der Drehzahl der Schneidvorrichtung 30 in Abhängigkeit der Drehrichtung der Schneidvorrichtung 30 als Maschinenparameter genutzt werden. Hierbei kann die Drehzahl der Schneidvorrichtung 30 bei einer dem Förderrotor 20 entgegengesetzten Drehrichtung höher sein, als bei einer dem Förderrotor 20 entsprechenden Drehrichtung. Bei einer entgegengesetzten Drehrichtung der Schneidvorrichtung 30 können die Schneidelemente 42 in dem Erntegutkanal 18 in Förderrichtung des Erntegutes durch den Förderrotor 20 kämmen und so das Erntegut zerteilen. Dies hat den Vorteil, dass die Schneidelemente 32 die Förderung des Erntegutes unterstützen. Bei gleicher Drehrichtung des Förderrotors 20 und der Schneidvorrichtung 30 kämmen die Schneidelemente 32 in dem Erntegutkanal 18 entgegen der Förderrichtung des Erntegutes durch die in entgegengesetzter Richtung laufenden Rotorelemente 24 des Förderrotors 20. Grundsätzlich können bei einer hohen Schnittgeschwindigkeit, also einer Relativgeschwindigkeit zwischen der Schneidvorrichtung 30 und der Gegenschneide 48, insbesondere zwischen einem Schneidelement 32 und einer Gegenschneide 48 in Form eines Rotorelementes 24, Schneiden mit geringere Schärfe zum Zerteilen des Erntegutes eingesetzt werden, wodurch die Standzeit der Schneidelemente 32 und/oder Schneidmesser 42 verlängert werden kann.

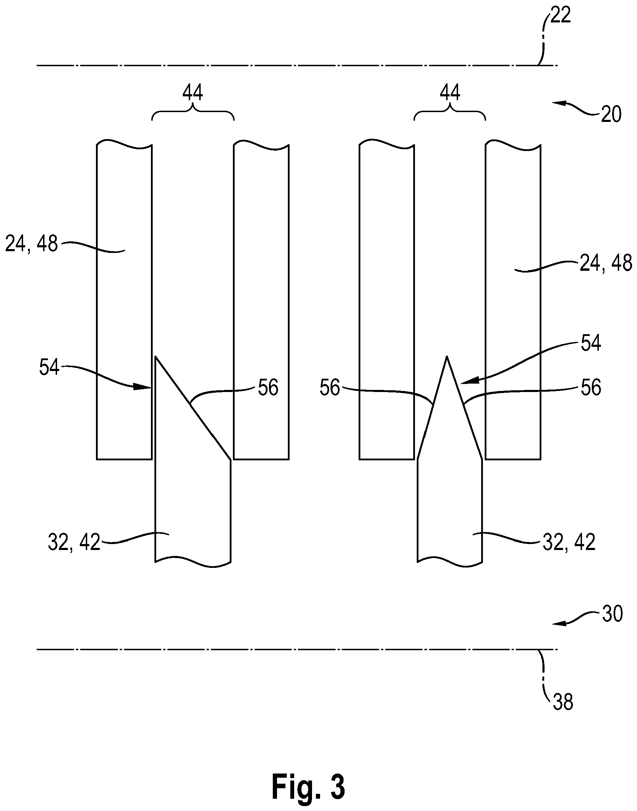

In Figur 3 sind in einer Draufsicht Schneidelemente 32 und/oder Schneidmesser 42 der Schneidvorrichtung 30 dargestellt, welche um die Rotationsachse 38 drehen. Die Schneidelemente 32 und/oder Schneidmesser 42 sind in kämmendem Eingriff mit den als Gegenschneiden 48 wirkenden Rotorelementen 24 des Förderrotors 20. Die Schneidelemente 32 und/oder Schneidmesser 42 sind jeweils in zwischen zwei benachbarten Rotorelementen 24 angeordneten Schneidebenen 44 angeordnet. Die Schneidelemente 32 und/oder Schneidmesser 42 weisen jeweils eine Schneide 54 auf, können aber auch mehrschneidig, beispielsweise in Drehrichtung betrachtet mit jeweils einer Schneide 54 an der Vorder- und Hinterkante ausgebildet sein. Eine Schneide 54 kann eine Fase 56 oder zwei Fasen 56 aufweisen, also einfasig oder zweifasig angeschliffen sein. Bei einer einfasig angeschliffen Schneide 56 kann durch die nähere Anordnung der Schneide 56 an der Gegenschneide 48 eine bessere Schnittqualität erreicht werden.

Die Schneidvorrichtung 30 ist aus der in den Figuren 1 und 2 dargestellten Betriebsposition, in der Schneidelemente 32 zumindest teilweise in den Erntegutkanal 18 zur Zerkleinerung des Erntegutes hineinragen, in eine Außerbetriebposition verbringbar, in der keine Schneidelemente 32 oder Schneidmesser 42 in dem Erntegutkanal 18 hineinragen. Dies ermöglicht einfaches Umstellen der Erntemaschine 10 auf die Verarbeitung von nicht zerkleinertem Erntegut. Darüber hinaus ist die Schneidvorrichtung 30 zur einfacheren Wartung aus der Außerbetriebposition in eine Wartungsposition verbringbar, beispielsweise durch zumindest teilweises seitliches Herausziehen aus der Erntemaschine 10.

### Bezugszeichenliste

- 10: Erntemaschine
- 12: Ballen
- 14: Aufsammeltrommel
- 16: Förderorgan
- 18: Erntegutkanal
- 20: Förderrotor
- 22: Drehachse
- 24: Rotorelement
- 26: Presskammer
- 28: Gutleitelement
- 30: Schneidvorrichtung
- 32: Schneidelement
- 34: Gehäuse
- 36: Presswalze
- 38: Rotationsachse
- 40: Trägerwelle
- 42: Schneidmesser
- 44: Schneidebene
- 46: Ausnehmung
- 48: Gegenschneide
- 50: Aktor
- 52: Rotorabstreifer
- 54: Schneide
- 56: Fase

## Patentansprüche

1. Erntemaschine, insbesondere Ballenpresse oder Ladewagen, mit einer Schneidvorrichtung (30) für landwirtschaftliches Erntegut, wobei die Schneidvorrichtung (30) eine Vielzahl von jeweils in einer Schneidebene (44) wirkenden Schneidelementen (32) aufweist, wobei die Schneidelemente (32) in Bezug auf einen von Erntegut durchströmten Erntegutkanal (18) nebeneinander angeordnet sind und während des Betriebes der Schneidvorrichtung (30) durch ein mit Ausnehmungen (46) versehenes Gutleitelement (28) zumindest teilweise in den Erntegutkanal (18) hineinragen und mit einer Gegenschneide (48) zum Zerkleinern des Erntegutes zusammenwirken, und einem antreibbaren Förderrotor (20) zum Fördern des Erntegutes, wobei der Förderrotor (20) die Gegenschneide (48) bildet, wobei die Schneidvorrichtung (30) um eine Rotationsachse (38) frei drehbar gelagert und antreibbar ausgebildet ist, und wobei die Schneidvorrichtung (30) eine Trägerwelle (40) aufweist, an welcher mindestens ein Schneidelement (32) und/oder ein Schneidmesser (42) lösbar angeordnet ist, **dadurch gekennzeichnet, dass** das mindestens eine Schneidelement (32) und/oder Schneidmesser (42) klappbar angeordnet ist.

2. Erntemaschine nach Anspruch 1, **dadurch gekennzeichnet, dass** die Gegenschneide (48) ortsfest oder beweglich, insbesondere verschiebbar und/oder drehbar, ausgebildet ist.

3. Erntemaschine nach Anspruch 1 oder 2, **dadurch gekennzeichnet, dass** die Rotationsachse (38) der Schneidvorrichtung (30) bezogen auf die Förderrichtung des Erntegutes hinter einer Drehachse (22) des Förderrotors (20) angeordnet ist.

4. Erntemaschine nach einem der vorherigen Ansprüche, **dadurch gekennzeichnet, dass** eine Drehzahl der Schneidvorrichtung (30) in Abhängigkeit mindestens eines Maschinenparameters und/oder Betriebsparameters regelbar ist.

5. Erntemaschine nach einem der vorherigen Ansprüche, **dadurch gekennzeichnet, dass** die Drehrichtung der Schneidvorrichtung (30) in Abhängigkeit mindestens eines Maschinenparameters und/oder Betriebsparameters regelbar ist.

6. Erntemaschine nach einem der vorherigen Ansprüche, **dadurch gekennzeichnet, dass** ein Schneidelement (32) jeweils mindestens ein Schneidmesser (42) aufweist, wobei mehrere Schneidmesser (42) parallel nebeneinander und/oder in Drehrichtung hintereinander innerhalb einer Schneidebene (44) anordbar sind.

7. Erntemaschine nach einem der vorherigen Ansprüche, **dadurch gekennzeichnet, dass** ein Schneidmesser (42) einschneidig oder mehrschneidig ausgebildet ist.

8. Erntemaschine nach einem der vorherigen Ansprüche, **dadurch gekennzeichnet, dass** die Schneidvorrichtung (30) in eine Betriebsposition, eine Außerbetriebsposition und/oder eine Wartungsposition verlagerbar ausgebildet ist.

## Claims

1. A harvesting machine, in particular a baler or loading vehicle, having a cutting means (30) for agricultural crop, wherein the cutting means (30) comprises a plurality of cutting elements (32) respectively acting in a cutting plane (44), wherein the cutting elements (32) are disposed adjacent to each other with respect to a crop channel (18) through which crop passes and, during the operation of the cutting means (30), protrude at least in part into the crop channel (18) through a crop guide element (28) provided with apertures (46) and cooperate with a counter cutter (48) for comminution of the crop, and a drivable feed rotor (20) for feeding the crop, wherein the feed rotor (20) forms the counter cutter (48), wherein the cutting means (30) is freely rotatably and drivably mounted about a rotational axis (38), and wherein the cutting means (30) comprises a support shaft (40) on which at least one cutting element (32) and/or a cutting blade (42) is releasably disposed, **characterized in that** the at least one cutting element (32) and/or cutting blade (42) is disposed in a hinged manner.

2. The harvesting machine according to claim 1, **characterized in that** the counter cutter (48) is configured in a stationary or mobile manner, in particular in a displaceable and/or rotatable manner.

3. The harvesting machine according to claim 1 or claim 2, **characterized in that** the rotational axis (38) of the cutting means (30) is disposed behind a rotational axis (22) of the feed rotor (20) with respect to the direction of feed of the crop.

4. The harvesting machine according to one of the preceding claims, **characterized in that** the rotary speed of the cutting means (30) can be adjusted as a function of at least one machine parameter and/or operational parameter.

5. The harvesting machine according to one of the preceding claims, **characterized in that** the direction of rotation of the cutting means (30) can be adjusted as a function of at least one machine parameter and/or operational parameter.

6. The harvesting machine according to one of the preceding claims, **characterized in that** a respective cutting element (32) comprises at least one cutting blade (42), wherein a plurality of cutting blades (42) can be disposed parallel to each other and/or one behind the other in the direction of rotation within a cutting plane (44).

7. The harvesting machine according to one of the preceding claims, **characterized in that** a cutting blade (42) is single-bladed or multi-bladed in configuration.

8. The harvesting machine according to one of the preceding claims, **characterized in that** the cutting means (30) is configured so as to be capable of being shifted into an operating position, an out of operation position and/or a maintenance position.

## Revendications

1. Machine de récolte, en particulier presse à balles ou remorque autochargeuse, comprenant un dispositif de coupe (30) pour du produit agricole récolté, le dispositif de coupe (30) comprenant une pluralité d'éléments de coupe (32) agissant respectivement dans un plan de coupe (44), les éléments de coupe (32) étant disposés côte à côte par rapport à un canal de produit récolté (18) traversé par du produit récolté et, pendant le fonctionnement du dispositif de coupe (30), pénétrant au moins en partie dans le canal de produit récolté (18) à travers un élément de guidage de produit (28) pourvu d'évidements (46), et coopérant avec une contre-lame (48) pour broyer le produit récolté, et comprenant un rotor d'amenée entraînable (20) pour amener le produit récolté, le rotor d'amenée (20) formant la contre-lame (48), le dispositif de coupe (30) étant conçu pour être monté en libre rotation et entraîné autour d'un axe de rotation (38), et le dispositif de coupe (30) comportant un arbre porteur (40) sur lequel au moins un élément de coupe (32) et/ou un couteau de coupe (42) est disposé de façon amovible, **caractérisée en ce que** le au moins un élément de coupe (32) et/ou le couteau de coupe (42) sont disposés de façon rabattable.

2. Machine de récolte selon la revendication 1, **caractérisée en ce que** la contre-lame (48) est conçue de façon fixe ou mobile, en particulier coulissante et/ou tournante.

3. Machine de récolte selon la revendication 1 ou 2, **caractérisée en ce que**, par rapport à la direction d'amenée du produit récolté, l'axe de rotation (38) du dispositif de coupe (30) est disposé derrière un axe de rotation (22) du rotor d'amenée (20) .

4. Machine de récolte selon une des revendications précédentes, **caractérisée en ce qu'**une vitesse de rotation du dispositif de coupe (30) est régulable en fonction d'au moins un paramètre de machine et/ou d'un paramètre de fonctionnement.

5. Machine de récolte selon une des revendications précédentes, **caractérisée en ce que** la direction de rotation du dispositif de coupe (30) est régulable en fonction d'au moins un paramètre de machine et/ou d'un paramètre de fonctionnement.

6. Machine de récolte selon une des revendications précédentes, **caractérisée en ce qu'**un élément de coupe (32) comporte respectivement au moins un couteau de coupe (42), plusieurs couteaux de coupe (42) pouvant être disposés parallèlement côte à côte et/ou, dans la direction de rotation, les uns derrière les autres à l'intérieur du plan de coupe (44).

7. Machine de récolte selon une des revendications précédentes, **caractérisée en ce qu'**un couteau de coupe (42) est conçu avec une lame ou plusieurs lames.

8. Machine de récolte selon une des revendications précédentes, **caractérisée en ce que** le dispositif de coupe (30) est conçu pour pouvoir être transféré dans une position de service, dans une position hors service et/ou une position de maintenance.
